# EUROPEAN PATENT APPLICATION

(11) **EP 3 032 482 A1**
(43) Date of publication of application: **15.06.2016**
(21) Application number: 15195075.5
(22) Date of filing: 18.11.2015
(51) Int. Cl.: G06Q 30/02

(54) **PAGE DISPLAY METHOD AND APPARATUS**

(30) Priority: 11.12.2014 CN 201410766415
(71) Applicant: Xiaomi Inc., Beijing 100085 (CN)
(72) Inventor: WANG, Yang, 100085 BEIJING (CN); CHEN, Changbing, 100085 BEIJING (CN); FU, Qiang, 100085 BEIJING (CN); HOU, Enxing, 100085 BEIJING (CN)
(74) Representative: Delumeau, François Guy

(57) **Abstract**

The present disclosure relates to a page display method and a page display apparatus, the page display method includes: obtaining (102) an identifying element applied to a current display page, in which the identifying element matches an associated object of a display object in the current display page; displaying (104) the identifying element in a display area associated with the display object and in the current display page.

## Description

### TECHNICAL FIELD

The present invention relates to an Internet technology field, and more particularly, to a page display method, and a page display apparatus.

### BACKGROUND

A website may display various display objects in web pages or APP (Application) pages for a user, and then the user may browse information of each display object respectively.

### SUMMARY

The present disclosure provides a page display method, and a page display apparatus to solve problems existing in the related art.

According to a first aspect, the invention relates toa page display method comprising:
obtaining an identifying element applied to (i.e. used in) a current display page, in which the identifying element matches an associated object of a display object in the current display page;
displaying the identifying element in a display area associated with the display object and in the current display page.

In an embodiment, if the associated object is a whole device, the display object is an accessory of the whole device, or is another whole device cooperated with the whole device;
if the associated object is an accessory, the display object is a whole device corresponding to the accessory, or is another accessory applied to a same whole device with the accessory.

In an embodiment, the identifying element comprises at least one of a color, a shading and an icon.

In an embodiment, property information of the identifying element matching the associated object is associated with a visual property of the associated object.

In an embodiment, if the display object is corresponding to a plurality of associated objects, the identifying element is an integrated identifying element obtained by performing an integrating process on a plurality of identifying elements corresponding respectively to the plurality of associated objects.

In an embodiment, the page display method further comprises:
detecting a trigger operation to the identifying element;
jumping to a display page of an associated object corresponding to a triggered identifying element; or overlapping a sub page on the current display page, and displaying information of an associated object corresponding to a triggered identifying element in the sub page.

According to a second aspect, the invention relates to a page display apparatus, comprising:
an obtaining unit, configured to obtain an identifying element applied to a current display page, in which the identifying element matches an associated object of a display object in the current display page;
a displaying unit, configured to display the identifying element in a display area associated with the display object and in the current display page.

In an embodiment, if the associated object is a whole device, the display object is an accessory of the whole device, or is another whole device cooperated with the whole device;
if the associated object is an accessory, the display object is a whole device corresponding to the accessory, or is another accessory applied to a same whole device with the accessory.

In an embodiment, the identifying element comprises at least one of a color, a shading and an icon.

In an embodiment, property information of the identifying element matching the associated object is associated with a visual property of the associated object.

In an embodiment, if the display object is corresponding to a plurality of associated objects, the identifying element is an integrated identifying element obtained by performing an integrating process on a plurality of identifying elements corresponding respectively to the plurality of associated objects.

In an embodiment, the page display apparatus further comprises:
a detecting unit, configured to detect a trigger operation to the identifying element;
a processing unit, configured to jump to a display page of an associated object corresponding to a triggered identifying element; or overlap a sub page on the current display page, and display information of an associated object corresponding to a triggered identifying element in the sub page.

According to a third aspect, the invention relates to a page display apparatus comprising:
a processor;
a memory for storing instructions executable by the processor;
in which the processor is configured to;
obtain an identifying element applied to a current display page, in which the identifying element matches an associated object of a display object in the current display page;
display the identifying element in a display area associated with the display object and in the current display page.

In one particular embodiment, the steps of the a page display method are determined by computer program instructions.

Consequently, according to a fourth aspect, the invention is also directed to a computer program for executing the steps of a page display method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in embodiments of the present disclosure may have advantageous effects as follows.

With the technical solutions of the present disclosure, by displaying an identifying element of an associated object in a display area associated with a corresponding display object, a user may understand an association relationship between the display object and the associated object according to the identifying element without taking a view and making a confirmation one by one according to guesses, thus facilitating to improve the user's browsing efficiency.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a page display method according to an exemplary embodiment.
Figs. 2-3 are schematic diagrams illustrating an interface according to an exemplary embodiment.
Fig. 4 is a schematic diagram illustrating an association relationship of objects according to an exemplary embodiment.
Figs. 5-11 are schematic diagrams illustrating an interface according to an exemplary embodiment.
Figs. 12-13 are block diagrams showing a page display apparatus according to an exemplary embodiment.
Fig. 14 is a block diagram showing a deive for displaying a page according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

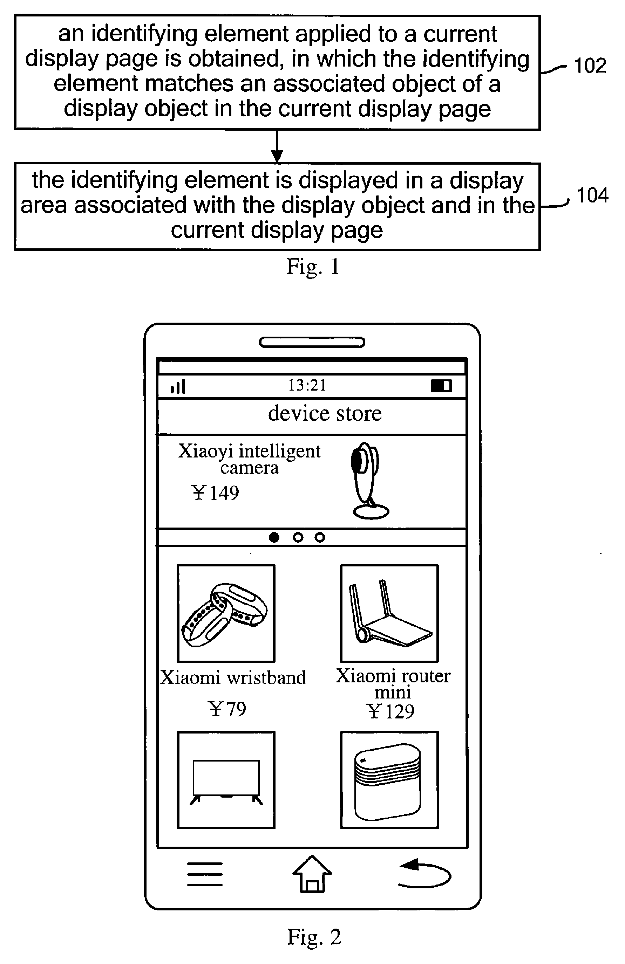

Fig. 1 is a flow chart showing a page display method according to an exemplary embodiment, and as shown in Fig. 1, this method is applied in a terminal and includes following steps.

In step 102, an identifying element applied to a current display page is obtained, in which the identifying element matches an associated object of a display object in the current display page.

In this embodiment, the associated object is another object which has an association relationship with the display object, the associated object may be displayed in the current display page to form another display object; or the associated object may be not displayed in the current display page, but be displayed in another display page by replacing the display page.

In this embodiment, there are various types of association relationships between objects. For example, if the associated object is a whole device, the display object may be an accessory of the whole device, for example, the associated object is a "Xiaomi mobile phone" while the display object is a "screen film", a "mobile phone back cover", etc.; or the display object may be another whole device cooperated with the associated object, for example, the associated object is the "Xiaomi mobile phone" while the display object is a "mobile power bank", a "Bluetooth headset", etc.

Or, if the associated object is an accessory, the display object may be a whole device corresponding to the accessory, for example, the associated object is the "screen film" while the display object is the "Xiaomi mobile phone"; or the display object may be another accessory applied to a same whole device with the associated object, for example, the associated object is the "screen film" while the display object is the "mobile phone back cover".

In step 104, the identifying element is displayed in a display area associated with the display object and in the current display page.

Assuming that a user hopes to find all accessories and whole devices (i.e. the associated objects) applied to the "Xiaomi mobile phone" after buying the "Xiaomi mobile phone", in the related art, the user is required to understand all available accessories and whole devices in advance so as to browse these accessories and whole devices directly, otherwise the user is required to browse many objects one by one, which affects a user's browsing efficiency greatly.

Therefore, in this embodiment, by displaying the identifying element of the associated object in the display area associated with the display object, the user is just required to browse a display page of the "Xiaomi mobile phone", but is not required to understand in advance or have a browse one by one, i.e. if the "Xiaomi mobile phone" is used as the display object of the current display page, the identifying element of the associated object may be browsed in the associated display area corresponding to the "Xiaomi mobile phone", such that all accessories and whole devices applied to the "Xiaomi mobile phone" are determined.

Taking a "device store" in the mobile phone as an example, the technical solutions of the present disclosure may be described in detail; of course, a person of ordinary skill in the art should understand that the technical solutions of the present disclosure may be applied to various kinds of display pages in various kinds of electronic devices, which are not limited in the present disclosure.

### 1. associated display area

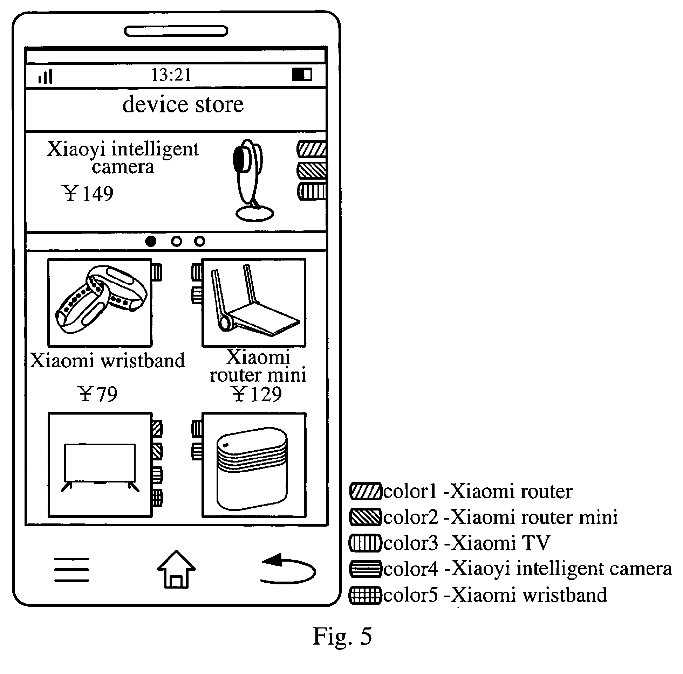

As shown in Fig. 2, the current display page may be a home page of the "device store". Five display objects are illustrated in Fig. 2, namely: a "Xiaoyi intelligent camera" at the top, a "Xiaomi wristband" and a "Xiaomi router mini" in the middle and a "Xiaomi TV" and a "Xiaomi router" at the below (only corresponding thumbnail images are illustrated in Fig. 5, if the page is flipped upward, corresponding texts will be displayed).

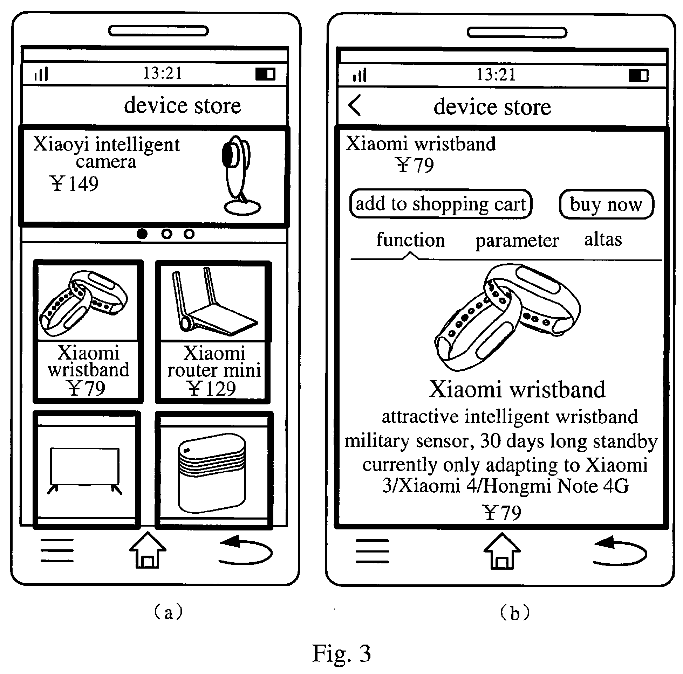

As an exemplary embodiment, for the home page of the "device store" illustrated in Fig. 2, an associated display area corresponding to each display object is illustrated in Fig. 3(a) and is enclosed by thick lines. It may be clearly seen that, since the home page of the "device store" includes a plurality of display objects, the display area associated with each display object is positioned around the each display object, so that an association relationship between the "display object" and the "display area" is established visually to avoid a false identification.

As another exemplary embodiment, if any one of the display objects in Fig. 2 is triggered, the user may browse a corresponding detail page, for example, Fig. 3(b) illustrates that a detail page of the "Xiaomi wristband" is displayed if the user clicks the "Xiaomi wristband': Since Fig. 3(b) includes only one display object "Xiaomi wristband"; the false identification does not occur, thus any position in the whole detail page may be used as the display area associated with the "Xiaomi wristband".

### 2. association relationship

As described above, the object may be the whole device or the accessory, and then the association relationship may be an association relationship between one whole device and another whole device, an association relationship between the accessory and the whole device, or an association relationship between one accessory and another accessory. Base on the whole devices (such as the Xiaomi wristband, the Xiaomo TV, etc.) illustrated in Fig. 2, taking the association relationship between one whole device and another whole device as an example, the association relationship will be described in detail in the following.

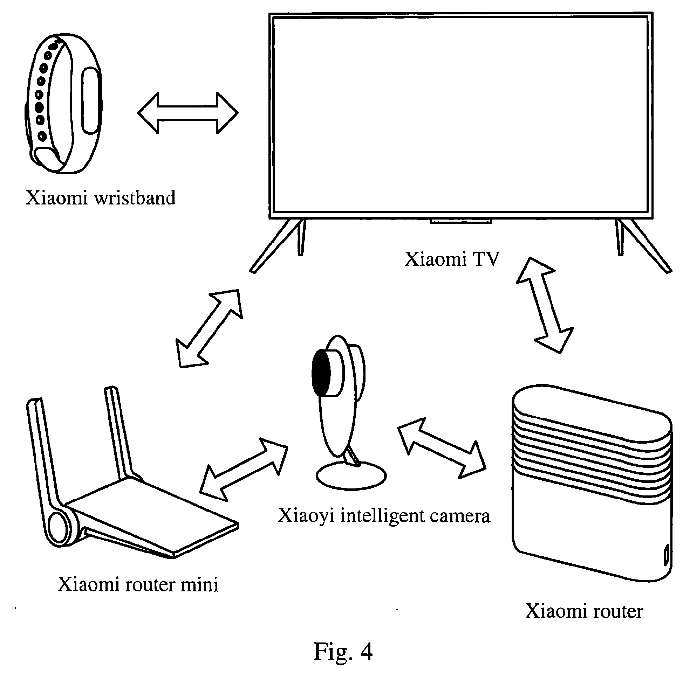

As shown in Fig. 4, there may be complex association relationships of the objects such as the Xiaoyi intelligent camera, the Xiaomi wristband, the Xiaomi TV, the Xiaomi router mini, the Xiaomi router and the like illustrated in Fig. 2, for example, the Xiaoyi intelligent camera may be applied to the Xiaomi TV, the Xiaomi router mini and the Xiaomi router, thus there may be association relationships of "the Xiaoyi intelligent camera- the Xiaomi TV", "the Xiaoyi intelligent camera- the Xiaomi router mini" and "the Xiaoyi intelligent camera- the Xiaomi router". The Xiaomi wristband may be applied to the Xiaomi TV, thus there may be an association relationship "the Xiaomi wristband - the Xiaomi TV", and so on.

Therefore, according to a combination and a coordination application relationship between objects, the association relationships of objects may be determined in advance, thus realizing a display of a corresponding identifying element.

### 3. display of an identifying element

A person of ordinary skill in the art should understand that, any element which may be used to distinguish and mark different objects may be used as the identifying element in the technical solutions of the present disclosure, for example, the identifying element may include at least one of a color, a shading and an icon.

Assume that there are association relationships of the display objects shown in table 1.

**table 1**

| display object | associated object 1 | associated object 2 | associated object 3 | associated object 4 |
|---|---|---|---|---|
| Xiaoyi intelligent camera | Xiaomi router | Xiaomi router mini | Xiaomi TV | / |
| Xiaomi wristband | Xiaomi TV | / | / | / |
| Xiaomi router mini | Xiaomi TV | Xiaoyi intelligent camera | / | / |
| Xiaomi TV | Xiaomi router | Xiaomi router mini | Xiaoyi intelligent camera | Xiaomi wristband |
| Xiaomi router | Xiaomi TV | Xiaoyi intelligent camera | / | / |

As an exemplary embodiment, for the home page of the "device store", Fig. 5 illustrates the identifying element of the corresponding associated object displayed in the display area associated with each display object, i.e. "the color". As shown in Fig. 5, in the display area corresponding to the display area illustrated in Fig. 3(a), each identifying element displaying the corresponding associated object may be displayed in a form of color blocks shown in Fig. 5.

Of course, since the drawings only use black and white line patterns to illustrate, in order to not affect the display effects of the drawings, the color blocks may be adopted in Fig. 5. Actually, a larger size of the color blocks may be adopted, even color 1, color 2, color 3, color 4 and color 5 may be integrated into the patterns of the display objects (for the "Xiaomi wristband", it may be a rectangular box above the text "Xiaomi wristband") by adjusting the color of patterns, texts or the like of the display objects, thus achieving a better visual effect.

In addition, the color corresponding to each object in Fig. 5 may be a single color or a mixed color. For example, the "Xiaomi router" is corresponding to "color 1", however, this "color 1" may be a pure color (such as a red color), may also be a combination of various colors (such as a red and white color).

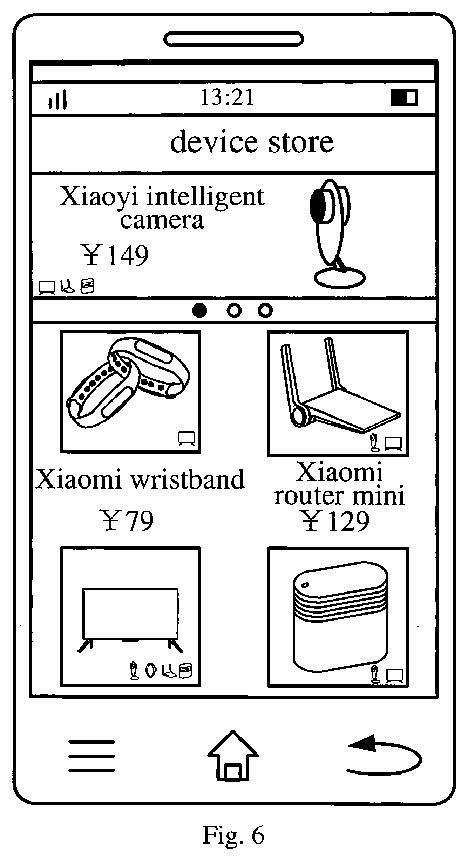

As another exemplary embodiment, still taking the home page of the "device store" as an example, Fig. 6 illustrates that a form of an "icon" is adopted as the identifying element of the associated object. As shown in table 1, the associated objects of the "Xiaoyi intelligent camera" may be the "Xiaomi TV", the "Xiaomi router mini" and the "the Xiaomi router", thus icons corresponding to the above-described associated objects may be displayed in the display area associated with the "Xiaoyi intelligent camera". Therefore, the user may understand the association relationships of these objects directly, i.e. the "Xiaoyi intelligent camera" may be cooperated with the "Xiaomi TV", the "Xiaomi router mini" and the "the Xiaomi router".

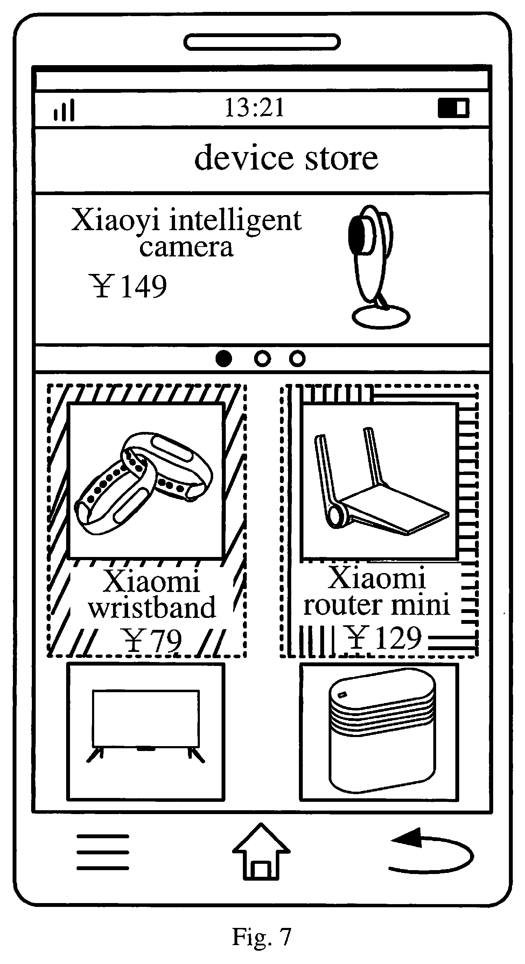

As another exemplary embodiment, still taking the home page of the "device store" as an example, Fig. 7 illustrates that a form of a "shading" is adopted as the identifying element of the associated object. For ease of description, assuming that the "Xiaomi wristband" is just associated with the "Xiaomi mobile phone" while the "Xiaomi router mini" is associated respectively with the "Xiaoyi intelligent camera" and the "Xiaomi TV" in Fig. 7, accordingly, a diagonal stripe pattern corresponding to the "Xiaomo mobile phone" may be used as a shading of the display area associated with the "Xiaomi wristband", and a combination of a horizontal stripe pattern and a vertical stripe pattern corresponding respectively to the "Xiaoyi intelligent camera" and the "Xiaomi TV" may be used as the shading of the display area associated with the "Xiaomi router mini".

Some matters should be noted.

A. Although Figs. 5-7 respectively illustrate embodiments adopting the color, the icon and the shading as the identifying element, actually, a variety of forms may be combined with each other, for example, a combination of the color and the icon, a combination of the color and the shading, a combination of the icon and the shading and the like, or a combination of the color, the icon and the shading may be adopted, thus a more strongly marked effect is created in the visual and the association relationship of objects may be demonstrated.

B. Since the identifying elements indicate the association relationships of the plurality of objects in the visual, property information of the identifying element matching the associated object is associated with a visual property of the associated object.

Take the "color" as an example. Since the color of the "Xiaomi mobile phone" is a black color and a white color, the color of the "Xiaomi TV" is a golden color, the color of the "Xiaomi wristband" is a candy color, whereby it is possible to set the property of the corresponding identifying element "color", so that the user may naturally think of the corresponding associated object when seeing a certain color, thus helping to reduce a amount of user's learning and improving a browsing efficiency.

Similarly, for the "icon", a thumbnail image or a structure diagram of the associated object may be adopted directly, having a very high identifiability. For the "shading", the shading pattern may be formed according to a surface material quality of each associated object, for example a texture of a back cover of the Xiaomi mobile phone; or the shading pattern may be formed by converting the icon of the associated object to the corresponding "shading", in this way, the user may easily form an association between the shading and the associated object.

C. If the display object is corresponding to a plurality of associated objects, the identifying element may be an integrated identifying element obtained by performing an integrating process on a plurality of identifying elements corresponding respectively to the plurality of associated objects.

For example, for the "color", if the "Xiaomi router" is corresponding to the "Xiaomi TV" and the "Xiaoyi intelligent camera", and the "Xiaomi TV" is corresponding to the "golden", the "Xiaoyi intelligent camera" is corresponding to the "white", the color block corresponding to each object may be adopted to present the form shown in Fig. 5; or the integrating process is performed on the "golden" and the "white" to form the integrated identifying element, such as a "golden and white" color, thus only one color block designated by this "golden and white" color is required to be displayed.

Similarly, the integrating process may be performed on a plurality of icons or a plurality of shadings to form the corresponding integrated identifying element.

In addition, similar to Figs. 5-7, the corresponding identifying elements may be displayed in the detail page illustrated in Fig. 3 (b), here, taking the detail page of the "Xiaomi wristband" illustrated in Fig. 3 (b) as an example, the display of the identifying element will be described.

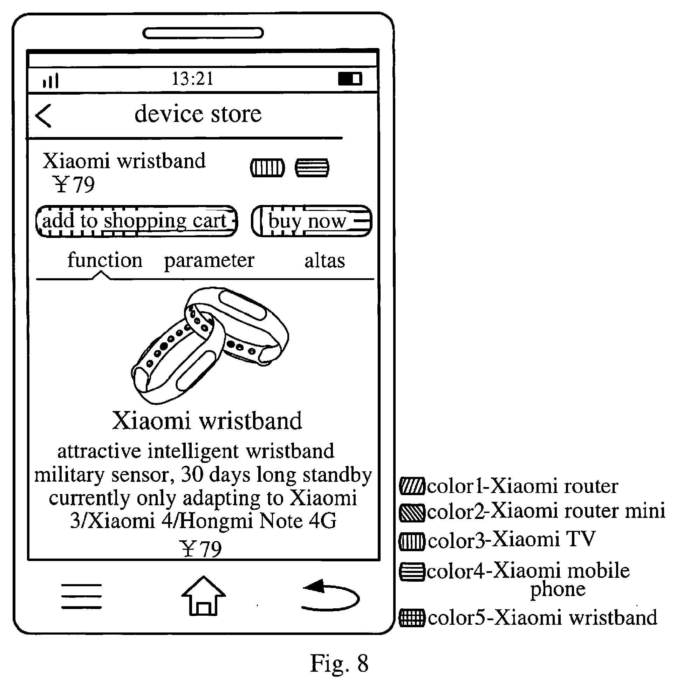

As shown in Fig. 8, assume that the "Xiaomi wristband" is associated with the "Xiaomi TV" and the "Xiaomi mobile phone". As an exemplary embodiment, in a form similar to the color blocks illustrated in Fig. 5, the color blocks corresponding respectively to the "Xiaomi TV" and the "Xiaomi mobile phone" are shown to display the color 3 and color 4 at the right side of the text "Xiaomi wristband" . Or as another exemplary embodiment, for function buttons such as "add to shopping cart", "buy now" and the like in the page, color properties of these function buttons may be set according to the colors corresponding to the "Xiaomi TV" and the "Xiaomi mobile phone".

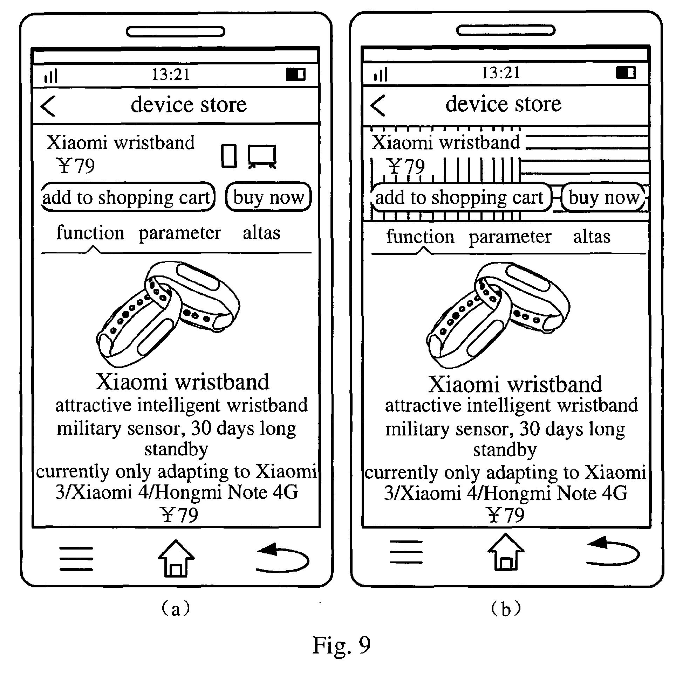

As shown in Fig. 9, Fig. 9(a) illustrates the identifying element of the associated object based on the form of the "icon", for example, icons corresponding respectively to the "Xiaomi TV" and the "Xiaomi mobile phone" may be displayed at the right side of the text "Xiaomi wristband". Fig. 9(b) illustrates the identifying element of the associated object based on the form of the "shading", for example, the horizontal stripe pattern and the vertical stripe pattern corresponding respectively to the "Xiaomi TV" and the "Xiaomi mobile phone" may be displayed at a position where the text "Xiaomi wristband" is at.

### 4. trigger operation to the identifying element

Based on the identifying element, the association relationship between the display object and the associated object may be established, it is easy for the user to understand the association relationships of objects; based on this, in the page where the display object is in, the user may be likely to want further information of the associated object, so following operations may be performed.
(1) a trigger operation to the identifying element is detected;
(2) a display page of an associated object corresponding to a triggered identifying element is displayed; or a sub page is overlapped on the current display page, and information of an associated object corresponding to a triggered identifying element is displayed in the sub page.

There may be two processing ways to perform operation (2), and in the following, take the identifying element in the form of the "icon" as an example to explain each processing way.

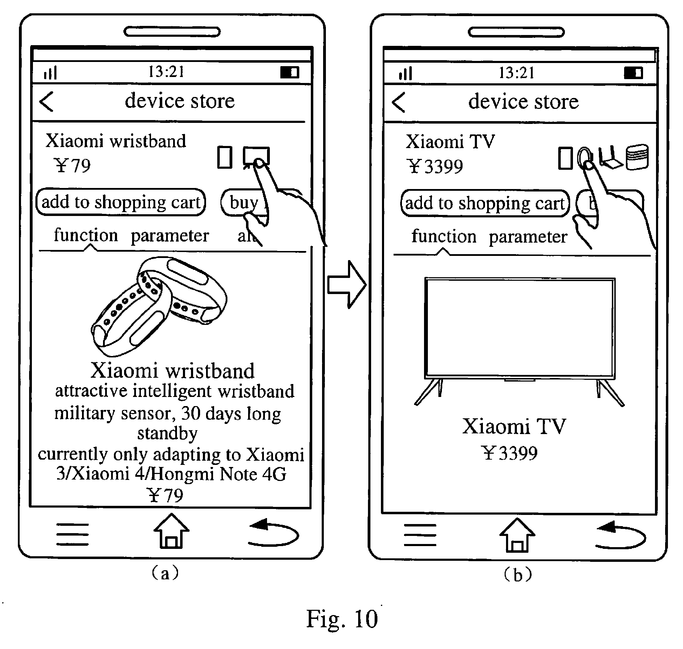

As an exemplary embodiment, as shown in Fig. 10(a), the user may click the "Xiaomi TV" icon with his/her finger directly in the detail page of the "Xiaomi wristband" to trigger an information browse of the associated object "Xiaomi TV". As shown in Fig. 10(b), the detail page of the "Xiaomi TV" is directly displayed for responding to the trigger operation of the user, such that the user may directly browse the details of the "Xiaomi TV" in this page.

If the user hopes to return to the detail page of the "Xiaomi wristband", the user may directly trigger the "Xiaomi wristband" icon in the detail page of the "Xiaomi TV" illustrated in Fig. 10(b), and then the detail page of the "Xiaomi wristband" is displayed; or the user may click a return key "<" at the upper left corner of the detail page of the "Xiaomi TV" to return to the previous page (i.e. the detail page of the "Xiaomi wristband").

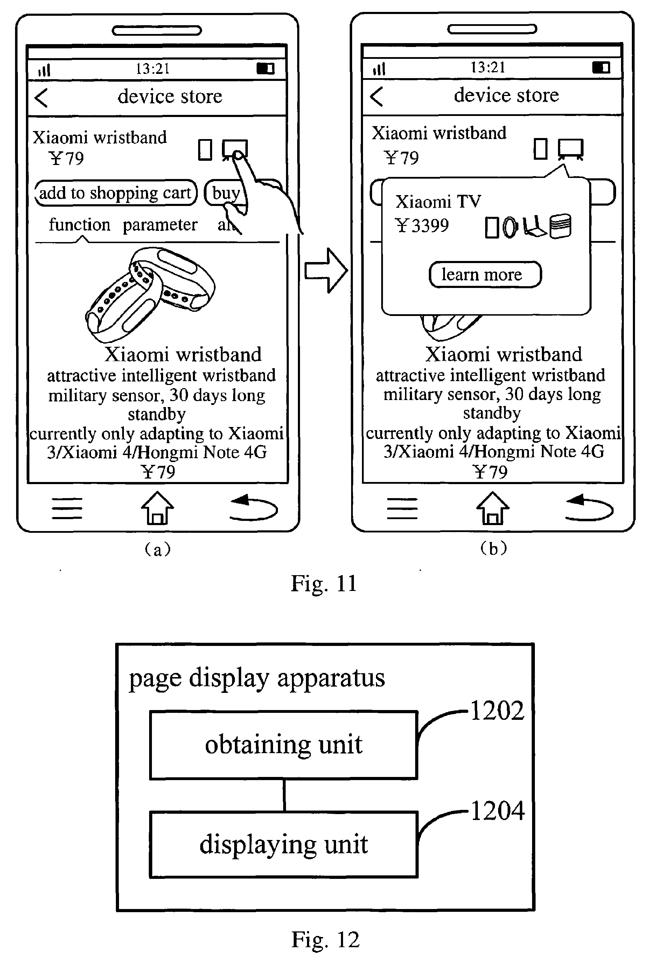

As another exemplary embodiment, as shown in Fig. 11(a), the user may click the "Xiaomi TV" icon with his/her finger directly in the detail page of the "Xiaomi wristband" to trigger an information browse of the associated object "Xiaomi TV". As shown in Fig. 11(b), a sub page (such as a "bubble" window illustrated in Fig. 11(b)) is overlapped on the detail page of the "Xiaomi wristband" for responding to the trigger operation of the user, and the information of the "Xiaomi TV" may be displayed in this sub page. The detailed information of the "Xiaomi TV" may be displayed in the sub page, similar to the situation that the content in the detail page illustrated in Fig. 10(b) is displayed in the sub page, or a brief content illustrated in Fig. 11(b) may be displayed so that the user may click a "learn more" button in the sub page to display the detail page illustrated in Fig. 10(b).

If the user hopes to return to the detail page of the "Xiaomi wristband", the user may directly trigger the "Xiaomi wristband" icon in the sub page to display the detail page of the "Xiaomi wristband"; or the user may click an area not covered by the sub page in the detail page of the "Xiaomi wristband" to cancel the display of the sub-page and to return to the detail page of the "Xiaomi wristband".

Corresponding to the above-described embodiments of the page display method, the present disclosure also provides embodiments of page display apparatus.

Fig. 12 is a block diagram showing a page display apparatus according to an exemplary embodiment. Referring to Fig. 12, the page display apparatus includes an obtaining unit 1202 and a displaying unit 1204.

The obtaining unit 1202 is configured to obtain an identifying element applied to a current display page, in which the identifying element matches an associated object of a display object in the current display page.

The displaying unit 1204 is configured to display the identifying element in a display area associated with the display object and in the current display page.

Alternatively, if the associated object is a whole device, the display object is an accessory of the whole device, or is another whole device cooperated with the whole device.

If the associated object is an accessory, the display object is a whole device corresponding to the accessory, or is another accessory applied to a same whole device with the accessory.

Alternatively, the identifying element includes at least one of a color, a shading and an icon.

Alternatively, property information of the identifying element matching the associated object is associated with a visual property of the associated object.

Alternatively, if the display object is corresponding to a plurality of associated objects, the identifying element is an integrated identifying element obtained by performing an integrating process on a plurality of identifying elements corresponding respectively to the plurality of associated objects.

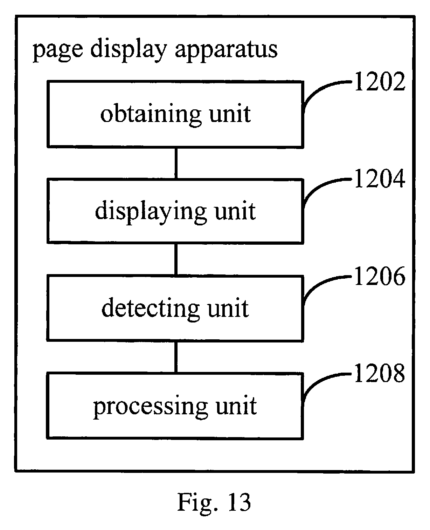

As shown in Fig. 13, in which Fig. 13 is a block diagram showing another page display apparatus according to an exemplary embodiment, this embodiment may further include a detecting unit 1206 and a processing unit 1208 based on the embodiment shown in Fig. 12.

The detecting unit 1206 is configured to detect a trigger operation to the identifying element.

The processing unit 1208 is configured to jump to a display page of an associated object corresponding to a triggered identifying element; or is configured to overlap a sub page on the current display page, and to display information of an associated object corresponding to a triggered identifying element in the sub page.

With respect to the apparatuses in the above embodiments, the specific manners for performing operations for individual modules therein have been described in detail in the embodiments regarding the method embodiments, which are not elaborated herein again.

For the apparatus embodiments, since they substantially correspond to the method embodiments, concerning related parts of the device embodiments, reference is made to corresponding parts of the method embodiments The above-described apparatus embodiments are merely illustrative, in which a unit as a separate component may or may not be physically separated, a component displayed as a unit may or may not be a physical unit, i.e. may be located at a place, or be distributed on multiple network units. According to the actual need to select parts or all of the modules to achieve the purpose of the present disclosure. A part or all of the modules may be selected according to practical needs so as to achieve the object of the solution of the present disclosure, which may be understood and implemented by those skilled in the art without creative labor.

Accordingly, the present disclosure also provides a page display apparatus, including: a processor; a memory for storing instructions executable by the processor; in which the processor is configured to: obtain an identifying element applied to a current display page, in which the identifying element matches an associated object of a display object in the current display page; display the identifying element in a display area associated with the display object and in the current display page.

Accordingly, the present disclosure also provides a terminal, and the terminal includes a memory, and one or more programs, in which the one or more programs are contained in the memory, and are configured to be executed by one or more processors, and include instructions for performing following operations of obtaining an identifying element applied to a current display page, in which the identifying element matches an associated object of a display object in the current display page; displaying the identifying element in a display area associated with the display object and in the current display page.

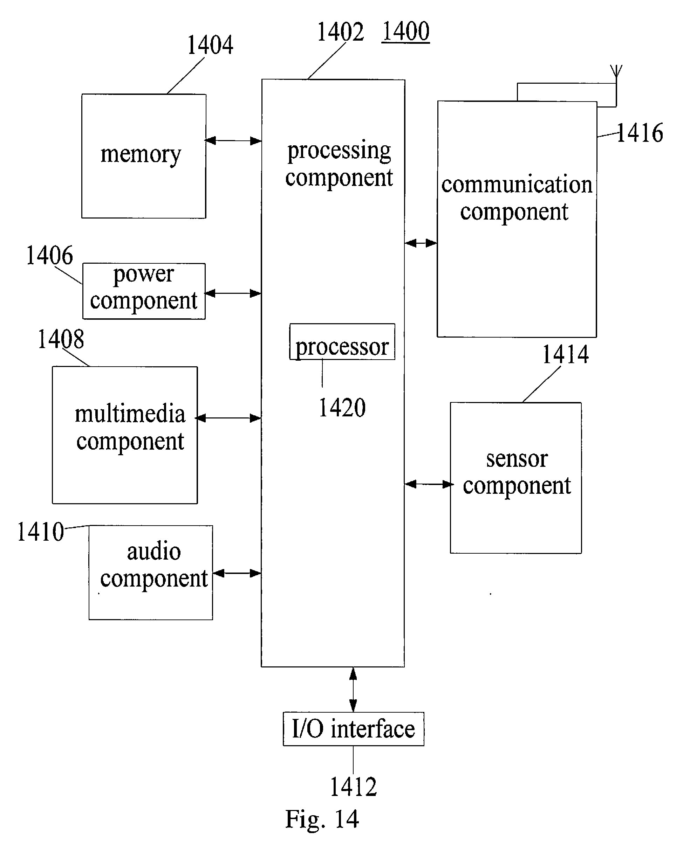

Fig. 14 is a block diagram of a device 1400 for displaying a page according to an exemplary embodiment. For example, the device 1400 may be a mobile phone, a computer, a digital broadcast terminal, a messaging device, a gaming console, a tablet, a medical device, an exercise equipment, a personal digital assistant, and the like.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, videos, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A page display method, comprising:
obtaining (102) an identifying element applied to a current display page, wherein the identifying element matches an associated object associated with a display object in the current display page;
displaying (104) the identifying element in a display area associated with the display object in the current display page.

2. The page display method according to claim 1, wherein
if the associated object is a whole device, the display object is an accessory of the whole device, or is another whole device able to cooperate with the whole device;
if the associated object is an accessory, the display object is a whole device corresponding to the accessory, or is another accessory applied to a same whole device with the accessory.

3. The page display method according to any one of claims 1 to 2, wherein the identifying element comprises at least one of a color, a shading and an icon.

4. The page display method according to any one of claims 1 to 3, wherein property information of the identifying element matching the associated object is associated with a visual property of the associated object.

5. The page display method according to any one of claims 1 to 4, wherein if the display object is corresponding to a plurality of associated objects, the identifying element is an integrated identifying element obtained by performing an integrating process on a plurality of identifying elements corresponding respectively to the plurality of associated objects.

6. The page display method according to any one of claims 1 to 5, further comprising:
detecting a trigger operation to the identifying element;
jumping to a display page containing information about an associated object corresponding to a triggered identifying element; or overlapping a sub page on the current display page, and displaying information about an associated object corresponding to a triggered identifying element in the sub page.

7. A page display apparatus, comprising:
an obtaining unit (1202), configured to obtain an identifying element applied to a current display page, wherein the identifying element matches an associated object associated with a display object in the current display page;
a displaying unit (1204), configured to display the identifying element in a display area associated with the display object in the current display page.

8. The page display apparatus according to claim 7, wherein
if the associated object is a whole device, the display object is an accessory of the whole device, or is another whole device cooperated with the whole device;
if the associated object is an accessory, the display object is a whole device corresponding to the accessory, or is another accessory applied to a same whole device with the accessory.

9. The page display apparatus according to any one of claims 7 to 8, wherein the identifying element comprises at least one of a color, a shading and an icon.

10. The page display apparatus according to any one of claims 7 to 9, wherein property information of the identifying element matching the associated object is associated with a visual property of the associated object.

11. The page display apparatus according to any one of claims 7 to 10, wherein if the display object is corresponding to a plurality of associated objects, the identifying element is an integrated identifying element obtained by performing an integrating process on a plurality of identifying elements corresponding respectively to the plurality of associated objects.

12. The page display apparatus according to any one of claims 7 to 11, further comprising:
a detecting unit (1206), configured to detect a trigger operation to the identifying element;
a processing unit (1208), configured to jump to a display page of an associated object corresponding to a triggered identifying element; or configured to overlap a sub page on the current display page, and to display information of an associated object corresponding to a triggered identifying element in the sub page.

13. A page display apparatus (1400), comprising:
a processor (1420); and
a memory (1404) for storing instructions executable by the processor;
wherein the processor (1420) is configured to:
obtain an identifying element applied to a current display page, wherein the identifying element matches an associated object of a display object in the current display page;
display the identifying element in a display area associated with the display object and in the current display page.

14. A computer program including instructions for executing the steps of a page display method according to any one of claims 1 to 6 when said program is executed by a computer.

15. A recording medium readable by a computer and having recorded thereon a computer program including instructions for executing the steps of a page display method according to any one of claims 1 to 6.
